# EUROPEAN PATENT SPECIFICATION

(11) **EP 2 387 875 B1**
(45) Date of publication and mention of the grant of the patent: **09.07.2014**
(21) Application number: 10163012.7
(22) Date of filing: 17.05.2010
(51) Int. Cl.: E01H 1/04, E01C 13/08

(54) **Infill removal device for removing infill from a strip of artificial turf**
Vorrichtung zur Beseitigung von Füllmaterial aus einem Streifen Kunstrasen
Dispositif d'élimination d'intercalaire pour éliminer l'intercalaire d'une bande de gazon artificiel

(43) Date of publication of application: 23.11.2011
(73) Proprietor: Schuurman Holding B.V., 1394 AC Nederhorst den Berg (NL)
(72) Inventor: Schuurman, Thomas, 1394 AC NEDERHORST DEN BERG (NL)
(74) Representative: Hart, Walter

(56) References cited:
- EP-A1- 2 135 497
- EP-A2- 0 185 646
- WO-A1-2010/094576
- JP-A- 2000 008 314

## Description

### Field of the art

The present invention relates to processing artificial turf and in particular to a device and method for removing infill material from a strip of artificial grass.

### Description of the prior art

On modern sports fields, artificial turf is used more and more. The quality of the artificial turf has improved gradually and substantially over the years, and artificial turf is now a preferred choice for many sports clubs. In particular, artificial grass (or synthetic grass) is used widely on football fields, hockey fields, baseball fields and many other fields.

It is also known that artificial turf suffers from wear and tear. After a period of time, the artificial turf is worn out and needs to be replaced by new artificial turf. The removing of the old artificial turf is a costly operation. A substantial number of artificial turf fields have been installed over the past years, and a substantial number of these fields now need replacement. Therefore, devices have been developed to assist in the operation.

EP2135497 discloses an apparatus for handling artificial turf. The apparatus includes a removing station 110 for lifting a strip of artificial turf, a separation station 122 for separating filling material from the artificial turf and a winding station for winding the strip onto a shaft. EP2135497 discloses a solution which generates the artificial turf on the one hand and the infill material (also referred to as filler material) on the other hand. However, it was found that the resulting quantity of infill material needs further processing. Thus, the infill material generally needs to be transported from the site of the field to a separate processing facility for further processing. This is expensive and cumbersome. Furthermore, the apparatus of EP2135497 does not remove all the infill material.

Other systems also exist. US4084763 discloses a machine for laying down artificial turf or picking up artificial turf. The artificial turf and the infill material are simply rolled up together. Disadvantageously, a further processing step is then required to separate the artificial turf from the infill material. Next, the infill material itself needs to be processed in another processing step. US4084763 thus discloses a partial solution.

EP0185646 discloses a different approach which uses a stationary device for cleaning a strip of artificial turf. A disadvantage of this system is that a transport of the removed artificial turf from the field to the device is required prior to the processing thereof. After the method of EP0185646, the infill material itself needs to be further processed in a next step, which is another disadvantage. Furthermore, the apparatus of EP0185646 does not remove all the infill material.

WO2009/132851 and NL1032985 disclose systems for removing a portion of filler material from artificial turf. The artificial turf itself remains on the ground. A first disadvantage of these systems is that the artificial turf itself needs to be removed in a next processing step. Another disadvantage of these systems is that the infill material also requires further processing.

### Object of the invention

One object of the invention is to address at least one of the above mentioned problems and provide a removal device for removing infill material from artificial turf.

Another object of the invention is to provide a method and device for removing artificial turf which allows easier reuse or recycling of the filler material.

Another object of the invention is to provide a method and device for removing artificial turf which obviates an extra processing step for the infill material.

Another object of the invention is to provide an improved processing device and method for removing infill material from artificial turf which removes all or substantially all infill material from the artificial turf.

### The invention

In order to achieve at least one object, the invention provides a removal device for removing infill material from a strip of artificial turf, the removal device comprising,
- one or more guides for guiding the strip of artificial turf through the removal device,
- a first infill removing device for removing a first layer of infill material from the strip of artificial turf, and
- a second infill removing device for removing a second layer of infill material from the strip of artificial turf, the second layer being an infill material of a different kind as the first layer, wherein the second infill removing device is positioned downstream from the first infill removing device.

The words "first layer of infill material" generally refers to a layer of rubber granules. Rubber granules are widely used as infill material. However, a number of alternatives for rubber granules are developed, such as Geo Safe Play, which comprises cork. Also, granules from thermoplastic elastomer (TPE) are sometimes used. EPDM (Ethylene Propylene Diene Monomer) is another alternative.

The words "second layer of infill material" generally refer to a layer of sand infill, i.e. sand particles.

The filler material in artificial turf often comprises two components, i.e. rubber granules and sand particles. The two kinds of particles are located in two different layers in the artificial turf. The different layers continue to exist during the lifespan of the artificial turf. Thus, when the artificial turf is to be removed after a substantial number of years, the different layers still exist.

The sand layer is provided as a bottom layer which lies directly on top of the base of the artificial turf. On top of the sand particle layer, a top layer of rubber granules is provided. The sand particles and rubber granules mix somewhat, but to a much larger extent the two kinds of particles stay separated in separated layers and form a separation line.

In the invention, it was found that these two kinds of particles show a different mechanical behavior. It was found that the rubber granules remain rather loosely in the artificial turf. This corresponds to the purpose of the rubber granules, which is to provide a cushioned surface for the players and the ball.

The sand particles show a somewhat different behavior. The sand particles stick together somewhat and stick more or less to the artificial grass. The sand forms a rather firm or cohesive layer which does not come loose very easily.

Surprisingly, it was found that these characteristics enable a modified removal operation, in which a single removal step for removing as much of the filler material as possible, as for instance is known from EP2135497, is divided in two separate removal steps, i.e. one step for removing rubber granules and one step for removing sand **particles.** In an embodiment, the entire process of removing the infill material from the artificial turf may result in three separate components, i.e.
1) the artificial turf,
2) the rubber granules,
3) the sand particles.

In some conditions, each of these three components is directly reusable and has a commercial value which allows the component to be sold to other parties directly from the location of the removed field. With relatively simple means, more value can thus be created.

In many conditions, a next processing step wherein the infill material is transported to a factory for separation of the rubber granules from the sand particles becomes obsolete.

The filler material is removed in two separate stations, a rubber granules removing station and a sand particles removing station. The invention is cost-effective, because the entire processing can be performed on site, simply and in one operation.

In an embodiment, the first infill removing device and the second infill removing device are separate devices which are positioned at a distance from one another.

In an embodiment, the removal device comprises:
- a first discharge device which is connected to the first infill removing device and which is configured to discharge the first kind of infill to a first container, and
- a second discharge device which is connected to the second infill removing device and which is configured to discharge the second kind of infill to a second container.

In this way, the resulting components can be collected in a practical way.

In an embodiment, the removal device comprises a bending device for bending the strip of artificial turf in a bending region such that in the bending region blades of grass of the artificial turf extend outwardly and diverge from one another, wherein the first infill removing device is constructed to engage the strip of artificial turf in the bending region.

The diverging blades of grass allow easy access for the first infill removing device in order to contact the top layer of infill material.

In an embodiment, the removal device comprises a movable brush connected to a drive for moving the brush and constructed to engage the strip of artificial turf.

The movable brush was found to remove the rubber granules very well.

In an embodiment, the removal device is constructed to substantially remove the granules, but to substantially leave the sand particles in the strip of artificial turf. This allows the sand particles to be removed in a separate second step.

In an embodiment, the removal device is constructed to engage the top layer but to substantially avoid contact with the sand particles of the bottom layer. In practice, a short distance may be maintained between the bottom layer of sand particles and the tips of the hairs of the brush. This distance may be 1-4 mm.

In an embodiment, the second infill removal device is a different device as the first infill removal device.

The first infill removal device may, in dependence of the length of the grass blades and the thickness of the top and bottom layer, penetrate the artificial turf between 10-55 mm.

In an embodiment, the removal device is constructed to engage the strip of artificial turf with a predetermined force, and wherein said force is small enough to substantially avoid disturbance of sand particles near the base of the strip. The force is dependent on the speed of rotation of the brush, the stiffness of the hairs of the brush, and other factors. Typically, the hairs of the brush are manufactured from polypropylene en have a diameter of 2mm.

In an embodiment, the first infill removing device comprises one or more strip supports constructed to orient the strip of artificial turf vertically or substantially vertically, wherein the first infill removing device is constructed to engage the strip in the region where the strip is oriented vertically or substantially vertically.

The vertical orientation allows the rubber particles to come loose and fall down, but ensures that the sand particles substantially stay behind in the artificial turf. The vertical orientation may be combined with the bending of the strip, such that the first infill removal device engages the bent strip where it extends vertically or substantially vertically.

In an embodiment, the removal device comprises one or more strip supports for supporting a part of the strip of artificial turf in a substantially inverted orientation, i.e. in an upside down orientation or a substantially upside down orientation, wherein the second infill removal device is constructed to engage the strip of artificial turf where it is substantially inverted. Because the sand is more firm, gravity may then assist in the removal.

In an embodiment, the removal device comprises a beating device for beating the strip of artificial turf in a beating region. It was found that this is a simple and practical way of removing sand particles.

In an embodiment, the one or more strip supports are constructed to support the strip of artificial turf in the beating region in such a way that the strip of artificial turf has freedom of movement in a direction which is transverse to a main longitudinal direction of the strip, such that in use the strip moves perpendicularly to its main direction and thereby sheds the bottom layer of sand particles. A 'fluttering' movement of the strip facilitates the removal of sand particles.

In an embodiment, the removal device comprises
- a first strip support and a second strip support which are spaced apart,
- a beating device for beating the strip of artificial turf which is positioned between the first and second inverting support, wherein the strip of artificial turf is not supported at the beating device, such that the beating device is constructed to move the strip of artificial turf back and forth transverse to the direction of the strip.

A standing wave is created between the first and second strip support which goes up and down and which shakes the sand particles from the strip.

The beating device beats the strip on the side of the grass blades. This causes a movement of the strip in the other direction, while the sand particles tend to stay in the same place and become separated from the artificial turf. The inertia of the sand particles thus assists in the removal operation.

In an embodiment, the invention is mobile and the removal device is constructed to be moved forward over the ground surface, the removal device comprising a lifting device constructed for lifting the strip of artificial turf from the ground surface as the removal device is moved forward.

In an embodiment, the invention is constructed as a stationary device, and comprises:
- a receiving device constructed for receiving the strip of artificial turf which is fed to the processing device,
- one or more guides for guiding the strip of artificial turf through the removal device,
- a first infill removing device for removing granules from the strip of artificial turf, and
- a second infill removing device positioned downstream from the first infill removing device for removing sand particles from the strip of artificial turf after the granules have substantially been removed.

This embodiment allows removal of fill-in material in a controlled environment instead of outside on the pitch itself. The artificial turf and the infill material is removed together, transported to the stationary device and processed. It is also possible that the stationary device is positioned near the field, and that strips of artificial turf are transported over a short distance only.

The invention further relates to a method of removing a strip of artificial turf from a ground surface, the method comprising:
- lifting the strip of artificial turf from the ground,
- removing a first layer of infill material in a processing step,
- removing a second layer of infill material in a subsequent processing step, the second layer being an infill material of a different kind than the first layer.

The method provides the same advantages as the removal device.

In an embodiment, the method comprises:
- bending a part of the strip in a bending region such that the blades of grass extend outwardly and away from one another in the bending region, and
- engaging the strip of artificial turf in the bending region by a first infill removing device.

The top layer is removed while leaving the bottom layer of sand particles substantially in the strip of artificial turf.

In an embodiment, the method comprises:
- providing a first infill removing device, and
- engaging the granules with the first infill removing device while substantially avoiding contact with the bottom layer of sand particles which are located deeper into the artificial turf, i.e. closer to a base of the strip of artificial turf.

The invention also relates to a clean strip of used artificial turf, a quantity of granules or a quantity of sand particles obtained with the device according to the invention or with the method according to the invention.

These components may be sold to third parties directly from the location of the field.

The invention further relates to a device for removing infill material from a strip of artificial turf, the device comprising:
- one or more guides for guiding the strip of artificial turf through the removal device,
- a beating device for removing infill material from the strip of artificial turf, wherein the beating device is constructed to beat the strip on the side of the grass blades, such that use is made of the inertia of the infill material.

In an embodiment, two strip supports are provided to support the strip, and the beating device is constructed to act on the strip between the strip supports, in a region where the strip may move transverse to the main direction of the strip.

With this embodiment, substantially all the infill material may be removed from the strip.

The invention further relates to a method of using said device, the method comprising:
- guiding the strip of artificial turf through the removal device,
- beating the strip of artificial turf on the side of the grass blades, such that use is made of the inertia of the infill material.

### List of figures

The invention is explained in more detail in the text which follows, with reference to the figures, which show a number of embodiments, which are given purely by way of nonlimiting examples. The invention is only limited by the claims.
Figure 1 shows a side view of an embodiment of the invention.
Figure 2 shows a top view of the embodiment of figure 1.
Figure 3 shows a detailed side view of a first infill removing device in action.
Figure 4 shows a detailed side view of a sand particle removing device in action.
Figure 5 shows a side view of a section of typical artificial turf.

### Detailed description of the figures

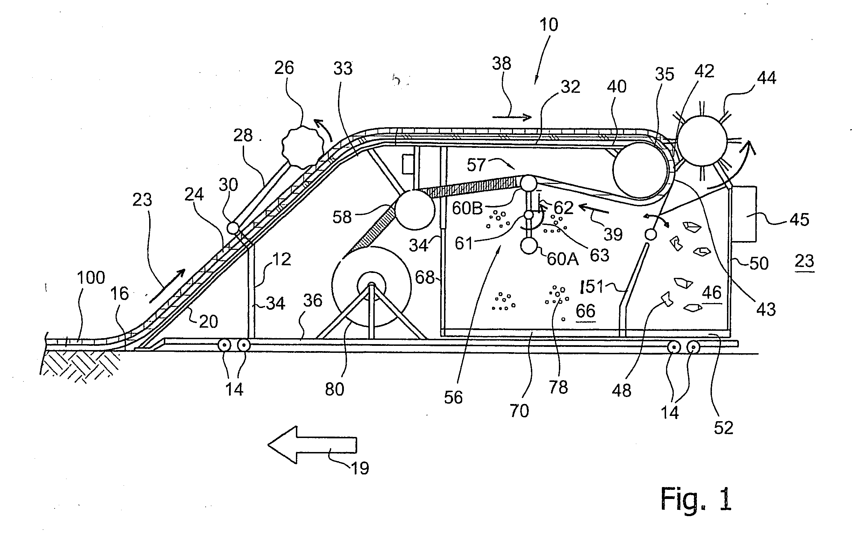

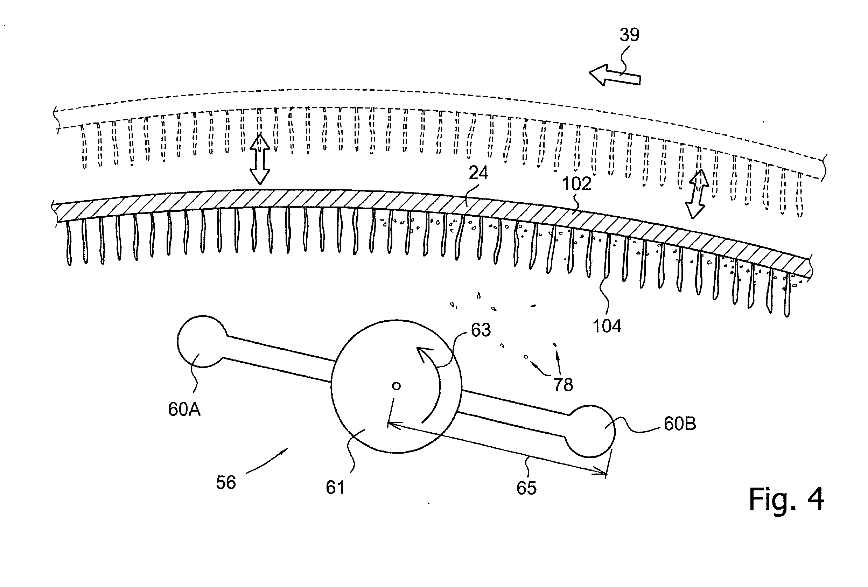

Turning to Figures 1-4, a removal device 10 according to the invention is shown. The removal device 10 comprises a frame 12 which is supported by wheels 14. Tracks or a skid device may also support the removal device 10 instead of the wheels 14. It is also possible that the removal device 10 is suspended above the ground by mounting the removal device to a bulldozer 17, tractor 17 or truck 17, or the like.

The removal device 10 is constructed to move or be moved over a ground surface 16 on which artificial turf 100 lies. The removal device 10 may be self-powered or driven by the bulldozer or truck 17. Here, the removal device 10 is driven by a bulldozer and the removal device 10 is mounted to the front end of the bulldozer 17. However, it is also possible to mount the removal device to a rear end of the bulldozer or other vehicle.

The removal device 10 has a width 11 which is adapted to a practical width of a strip 24 of artificial turf. The width 11 may be 3-4 meters, but may also be another width

The frame 12 supports the different parts of the removal device 10. A guiding device 20 is provided at a front side 22 of the removal device 10 for guiding a strip 24 of artificial turf upwards when the removal device is moved forwards. The guiding device 20 is a plate but may also be a set of rollers or a conveyor belt.

It is also conceivable that the guiding device 20 is a large roller which lifts the strip 24 from the underground via a rolling action.

The guiding device 20 extends at an inclined orientation. An auxiliary roller 26 is provided which is connected to the frame 12 via a pivotable arm 28 and a hinge 30. The auxiliary roller 26 is driven and drives the strip 24 along the guiding surface 20.

The guiding device 20 goes over in a horizontal guiding device 32 via a curved plate 33. The horizontal guiding device 32 is a plate which extends substantially horizontally. The horizontal guiding device 32 may also be a conveyor belt or comprise rollers. The strip 24 is now at an altitude above the ground surface.

The guiding device 20 and the horizontal guiding device 32 are supported by one or more posts 34 which are part of the frame 12 and extend vertically from a lower horizontal plate or beam 36 of the frame 12.

A further guiding roller 35 is provided near an end 40 of the horizontal guide 32. The guiding roller 35 is not driven by a drive, but may be driven by a drive if necessary.

The guiding roller 35 is constructed to guide the strip 24 from a horizontal orientation in one direction 38 to a substantially horizontal orientation in an opposite direction 39. The guiding roller 35 may have a diameter 130 between 50 and 150mm, preferably about 120mm.

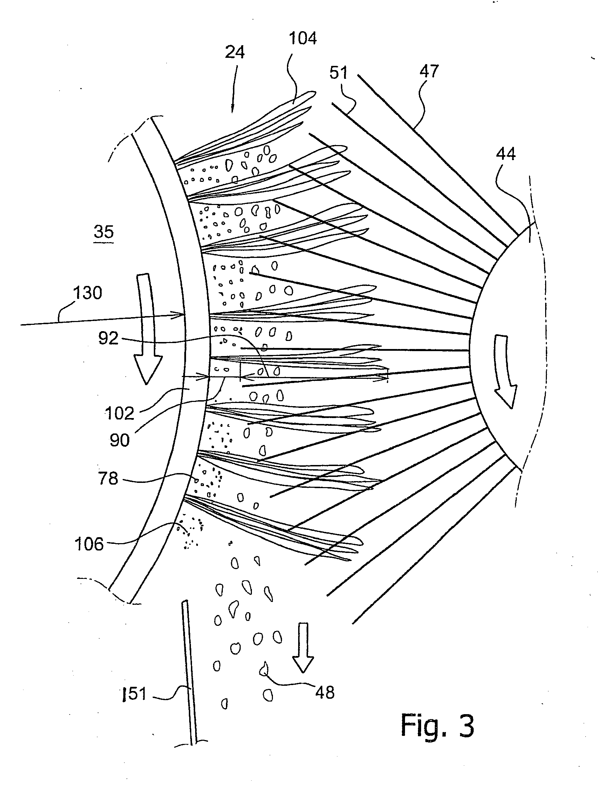

The strip 24 is bent by the guiding roller 35, such that a bending 42 region is formed. The strip undergoes a transition from the first direction 38 to the next direction 39 in the bending region 42. In the bending region 42, the blades of the grass diverge from one another, as is shown in more detail in figure 3.

The guiding roller 35 also creates a vertical region 43, which in this embodiment is a part of the bending region 42. This is shown in more detail in figure 3.

A first infill removing device in the form of a rotary brush 44 is provided which is constructed to engage the strip 24 in the bending region 42. The rotary brush 44 and its action is shown in more detail in figure 3. The rotary brush 44 is mounted to the frame via a vertical post 34. The rotary brush 44 is driven by a drive 45, which may be electrical. The rotary brush 44 comprises hairs 47. The rotary brush comprises adjusters which allow adjustment of the position of the rotary brush 44. According to requirements, the rotary brush 44 can be positioned closer to a base 102 (or backing layer) of the strip 24 or further away from the base of the strip 24. This allows fine tuning of the removal device, such that in use only rubber granules 48 are removed and the sand layer stays substantially inside the artificial turf. More specifically, the ends 51 of the hairs 47 penetrate the artificial turf to a certain depth 92, and remain at a certain distance 90 from the base 102. This distance may be 1-4 mm.

The rotary brush may rotate at a speed of 20-100 rotations per minute.

It is also possible that the strip 42 is engaged by the brush in a straight vertical region, i.e. a vertical region which is not bent.

A first collection container 46 is provided directly underneath the bending region 42, for collecting rubber granules 48 which drop from the strip 24 of artificial turf. The collection container 46 is defined by a first wall 50, a second wall 151 and a bottom surface 52.

It is also possible that a conveyor belt or other discharge device 121 is provided on which the rubber granules drop. A combination of a collection container 46 and a conveyor belt or other discharging device is also possible. The collection container 46 collects the rubber granules 48 and transfers the rubber granules to a discharge device 121. The discharge device may also be a vacuum-based device, which sucks the rubber granules via a stream of air.

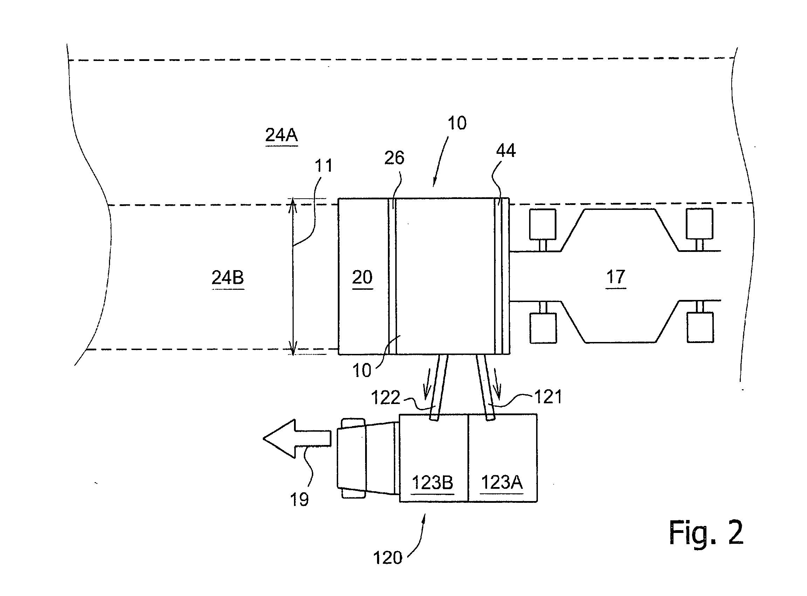

A separate vehicle 120 may be provided for collecting the rubber granules, as is shown in figure 2.

The guide roller 35 is constructed to change the orientation of the strip 24 from an upright orientation to a substantially inverted orientation, i.e. an upside down orientation. A further guide roller 58 is provided. The section of the strip 24 which extends between the roller 35 and the roller 58 is inverted or substantially inverted.

A second infill removal device in the form of a sand particles removal device 56 is provided in the inverted region 57. The sand particles removing device 56 is positioned downstream from the first infill removing device 44. The sand particles removing device 56 is a beating device and comprises a shaft 61 mounted on an axis of rotation. Two beating bars 60A, 60b are mounted at a distance 62 from the rotation axis 61. The beating bars 60A, 60B are elongate bars which span the width 11 of the removal device. The radius of the beating bars may be between 50-120mm, typically 80mm.

The beating bars 60A, 60B are constructed to beat against the strip 24 on the side of the grass blades during the rotation in direction 63. In use, the strip is pushed away by the beating bars, and the inertia causes the sand particles to stay in the same place. The strip and the sand particles become separated.

A sand particles collection container 66 is provided under the sand particles removal device 56.

The collection container 66 is defined by wall 151, wall 68 and bottom surface 70.

The collection container 66 may comprise a discharge device 122 for discharging the sand particles away from the removal device 10.

A collecting reel 80 is provided near the guiding roller 58. The collecting reel 80 is constructed to spool (or wind) the strip 24 onto the collecting reel 80. The collecting reel 80 may be driven by a drive. An unloading device may be provided for removing the reel 80 when it is full and providing a new, empty roller to the removal device 10.

The removal device is constructed to spool the strip 24 onto the reel 80 with the grass blades facing inwards.

It will be clear to the skilled person that the movements are relative movements. It is also possible to hold the removal device 10 stationary and to feed the strip 24 to the removal device 10. In this situation, the strip 24 will need to be removed from the underground in a separate processing action and to be transported to the removal device 10. The removal device 10 then is a processing device rather than a removal device, because the removing of the artificial turf itself is performed in a separate step.

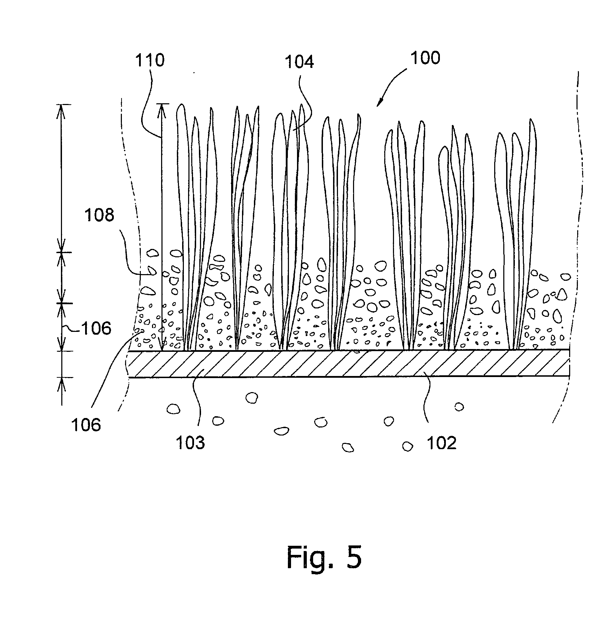

Figure 5 shows a typical configuration of artificial turf 100 on a ground surface. The artificial turf 100 comprises a base 102 and blades 104 of grass which are connected at one end 103 to the base 102. The base 102 may have a thickness of 1-4 mm. The grass blades 104 extend upwards or substantially upwards. The height 110 of the grass blades 104 is typically between 20 mm (for a hockey field) and 65 mm (for a football field).

A first layer 106 of sand particles 78 (or sand particles) is provided. The first layer 106 lies directly on top of the base 102. The sand layer is typically between 10 and 25 mm. A second layer 108 of rubber granules 48 is provided on top of the first layer 106. The second layer is typically between 10 and 30mm. Some mixing occurs between the rubber granules and the sand, but this mixing layer is very limited in thickness. The sand layer 106 is quite compact and stiff, whereas the rubber layer 108 is quite loose. This is due to the different size, shape, weight, flexibility and friction coefficient of sand particles and rubber granules. Other characteristics may also play a role in the layered nature of the infill material.

The sand particles are generally between 0.5 mm and 1 mm, whereas the rubber granules are generally between 0 and 5 mm. Sand particles are generally rather cubicle shaped, whereas rubber granules are rather elongate. Further, sand particles weigh approximately 2600 kg/m3, whereas rubber granules weigh approximately 1500kg/m3 (when measured as solid rubber). These differences result in a different packing of the material in the artificial turf, i.e. a relative looseness of the rubber granules and a relative firmness of the sand particles. The differences ensure that the layer of rubber granules remain on substantially top of the layer of sand particles, even after years of use of the artificial turf 100.

### Operation

With reference to figures 1-4, prior to the removal operation, the artificial turf has been cut into strips 24 which are of a suitable width to be processed by the removal device. It is conceivable that cutters are provided at the front end of the removal device 10 for cutting the strips during the removal operation itself. The artificial turf will often be artificial grass.

The strip 24 is guided upwards by the guiding device 20 while the removal device 10 is moved forwards over the ground surface in a direction 19.

The strip 24 then moves over the horizontal guide 32 to the end 40 thereof. The strip 24 is subsequently bent in a curve downwards by the guiding roller 35. The rotating brush 44 acts on the strip 24 of artificial turf in the bending region 42.

The rubber granules 48 are substantially removed by the rotating brush 44. The sand particles 49 stay substantially in the strip 24 of artificial grass. In practice, some sand particles 49 may be removed together with the rubber granules, but this remains limited.

The rotating brush 44 comprises adjusters with which the distance of the brush to the strip 24 can be adjusted. In this, way, fine tuning of the rotating rush is possible. If too much sand particles are removed together with the rotating brush, the distance between the brush and the strip is increased. If a substantial portion of the rubber granules 48 stay behind in the strip 24 of artificial turf, the distance is decreased.

The staying behind of the sand particles is partly due to the deeper location of the sand particles, and partly due to the cohesion between the sand particles and between the sand particles and the grass blades. Sand particles have the tendency to become more compact over the course of time, contrary to rubber granules. The sand particles stick together and to the artificial turf due to the compact configuration of the sand particles

The distance may depend on the type of artificial turf, on the kind of filling and of the amount of filling of respectively rubber granules and sand particles.

The speed of rotation of the rotating brush 44 can also be adjusted during operation in order to fine tune the operation.

The rubber granules 48 drop in the collection container 46.

Next, the strip 24 moves in direction 39 to the sand particles removal device 56. The strip 24 is now in an inverted orientation or a substantially inverted orientation. The strip is held under some tension by the guiding roller 35 on the one hand and a next guiding roller 58 on the other hand. The guiding roller 58 is driven by a drive 59. The part of the strip between the rollers 35 and 58 has some freedom of movement and is allowed to flutter. This is shown in more detail in figure 5, wherein in continuous lines a first position of the strip 24 is shown and in dashed lines a second position of the strip 24 is shown. The strip 24 moves fast between these extreme positions by the action of the beating bars 60 and thus sheds the sand particles 78.

The fluttering movement allows the sand particles 78 to loosen from the artificial turf 24 and fall down in the collection container 66. Gravitation assists in the loosening of the sand particles. Inertia of the sand particles may also play an important role.

The strip 24 is subsequently conveyed over the roller 58 to the reel 80. The strip is spooled on the reel 80. When the reel 80 is full, it is removed and a new, empty reel 80 is inserted.

Turning to figure 2, a truck 120 or other vehicle may move alongside the removal device 10 in a same direction 19 as the removal device 10. A first discharge device 121 in the form of a conveyor belt may be provided for discharging the rubber granules from the removal device to a first container 123A on the truck 120. A second discharge device 122 may be provided for discharging the sand particles to a second container 123B on the truck 120. When the containers 123A, 123B are full, the truck 120 may be replaced by an empty truck 120.

The end result of the process is that three separate components are created, i.e. a strip of cleaned artificial turf, a quantity of sand and a quantity of rubber granules. The three components each have commercial value and may be sold to other parties directly from the pitch.

It will be obvious to a person skilled in the art that the details and the arrangement of the parts may be varied over considerable range without departing from the invention as defined by the claims.

## Claims

1. Removal device for removing infill material from a strip of artificial turf, the removal device comprising,
• one or more guides for guiding the strip of artificial turf through the removal device,
• a first infill removing device for removing a first layer of infill material from the strip of artificial turf, and
• a second infill removing device for removing a second layer of infill material from the strip of artificial turf, the second layer being an infill material of a different kind than the first layer, wherein the second infill removing device is positioned downstream from the first infill removing device.

2. Removal device of claim 1, wherein:
• the first infill removing device is constructed for removing granules from the strip of artificial turf, and
• the second infill removing device is a sand particles removing device for removing sand particles from the strip of artificial turf.

3. Removal device of claim 1 or 2, wherein the first infill removing device and the second infill removing device are separate devices which are positioned at a distance from one another.

4. Removal device of any of the preceding claims, comprising a bending device for bending the strip of artificial turf in a bending region such that in the bending region the blades of grass extend outwardly and diverge from one another, wherein the first infill removing device is constructed to engage the strip of artificial turf in the bending region.

5. Removal device of any of the preceding claims, wherein the first infill removing device is constructed to substantially remove the first layer of infill material, but to substantially leave the second, deeper layer of infill material in the strip of artificial turf.

6. Removal device of any of the preceding claims, wherein the first infill removing device is constructed to engage an upper layer of infill material but to substantially avoid contact with the second, deeper layer of infill material.

7. Removal device of any of the preceding claims, wherein the first infill removing device comprises one or more strip supports constructed to orient a portion of the strip of artificial turf vertically or substantially vertically, wherein the first infill removing device is constructed to engage the strip in the region where the strip is oriented vertically or substantially vertically.

8. Removal device of any of the preceding claims, further comprising one or more strip supports for supporting a part of the strip of artificial turf in a substantially inverted orientation, i.e. in an upside down orientation or a substantially upside down orientation, wherein the second infill removing device is constructed to engage the strip of artificial turf where it is substantially inverted, wherein the second infill removing device comprises a beating device for beating the strip of artificial turf in a beating region.

9. Removal device of any of the preceding claims, the removal device being constructed to be moved forward over the ground surface, the removal device comprising a lifting device constructed for lifting the strip of artificial turf from the ground surface as the removal device is moved forward.

10. Removal device of any of claims 1-8, the removal device being constructed as a stationary device, the removal device comprising a receiving device constructed for receiving the strip of artificial turf which is fed to the removal device.

11. Method of removing a strip of artificial turf from a ground surface, the method comprising:
- lifting the strip of artificial turf from the ground,
- removing a first layer of infill material in a processing step,
- removing a second layer of infill material in a subsequent processing step, the second layer being an infill material of a different kind than the first layer.

12. Method of claim 11, comprising:
• bending a part of the strip in a bending region such that the blades of grass extend outwardly and away from one another in the bending region, and
• engaging the strip of artificial turf in the bending region by the first infill removing device.

13. Method of claim 11 or 12, comprising:
• providing a first infill removing device, and
• engaging the first layer of infill material with the first infill removing device while substantially avoiding contact with the second layer of infill material which is located deeper in the artificial turf, i.e. closer to a base of the strip of artificial turf.

14. Method of any of claims 11-13, further comprising:
• providing a support for supporting a part of the strip of artificial turf in an upside down orientation or a substantially upside down orientation, and
• removing the second layer of infill material by engaging the upside down part of the strip of artificial turf.

## Patentansprüche

1. Abführvorrichtung zum Abführen von Füllmaterial aus einem Streifen Kunstrasen, wobei die Abführvorrichtung umfasst:
- ein oder mehrere Führungsmittel zum Führen des Streifens Kunstrasen durch die Abführvorrichtung,
- eine erste Füllmaterialabführvorrichtung zum Abführen einer ersten Schicht von Füllmaterial aus dem Streifen Kunstrasen und
- eine zweite Füllmaterialabführvorrichtung zum Abführen einer zweiten Schicht von Füllmaterial aus dem Streifen Kunstrasen, wobei die zweite Schicht aus Füllmaterial einer anderen Art als die erste Schicht besteht und wobei die zweite Füllmaterialabführvorrichtung der ersten Füllmaterialabführvorrichtung nachgeschaltet positioniert ist.

2. Abführvorrichtung nach Anspruch 1, wobei:
- die erste Füllmaterialabführvorrichtung dazu ausgelegt ist, Granulat aus dem Streifen Kunstrasen abzuführen, und
- die zweite Füllmaterialabführvorrichtung eine Sandpartikel-Abführvorrichtung zum Abführen von Sandpartikeln aus dem Streifen Kunstrasen ist.

3. Abführvorrichtung nach Anspruch 1 oder 2, wobei die erste Füllmaterialabführvorrichtung und die zweite Füllmaterialabführvorrichtung separate Vorrichtungen sind, die in einem Abstand voneinander positioniert sind.

4. Abführvorrichtung nach einem der vorhergehenden Ansprüche, die eine Biegevorrichtung umfasst, die den Streifen Kunstrasen in einem Biegebereich derart biegt, dass sich die Grashalme in dem Biegebereich nach außen erstrecken und auseinanderlaufen, wobei die erste Füllmaterialabführvorrichtung dazu ausgelegt ist, den Streifen Kunstrasen in dem Biegebereich zu erfassen.

5. Abführvorrichtung nach einem der vorhergehenden Ansprüche, wobei die erste Füllmaterialabführvorrichtung dazu ausgelegt ist, im Wesentlichen die erste Schicht Füllmaterial abzuführen, jedoch die zweite, tiefere Schicht Füllmaterial in dem Streifen Kunstrasen im Wesentlichen übrig zu lassen.

6. Abführvorrichtung nach einem der vorhergehenden Ansprüche, wobei die erste Füllmaterialabführvorrichtung dazu ausgelegt ist, eine obere Schicht Füllmaterial zu erfassen, aber einen Kontakt mit der zweiten, tieferen Schicht Füllmaterial im Wesentlichen zu vermeiden.

7. Abführvorrichtung nach einem der vorhergehenden Ansprüche, wobei die erste Füllmaterialabführvorrichtung einen oder mehrere Streifenträger umfasst, die dazu ausgelegt sind, einen Abschnitt des Streifens Kunstrasen vertikal oder im Wesentlichen vertikal auszurichten, wobei die erste Füllmaterialabführvorrichtung dazu ausgelegt ist, den Streifen in dem Bereich zu erfassen, in dem der Streifen vertikal oder im Wesentlichen vertikal ausgerichtet ist.

8. Abführvorrichtung nach einem der vorhergehenden Ansprüche, die ferner einen oder mehrere Streifenträger umfasst, die dazu ausgelegt sind, einen Teil des Streifens Kunstrasen in einer im Wesentlichen umgekehrten Ausrichtung, d. h. in einer umgedrehten Ausrichtung oder in einer im Wesentlichen umgedrehten Ausrichtung, zu tragen, wobei die zweite Füllmaterialabführvorrichtung dazu ausgelegt ist, den Streifen Kunstrasen dort zu erfassen, wo er im Wesentlichen umgekehrt ist, wobei die zweite Füllmaterialabführvorrichtung eine Klopfvorrichtung umfasst, um den Streifen Kunstrasen in einem Klopfbereich abzuklopfen.

9. Abführvorrichtung nach einem der vorhergehenden Ansprüche, wobei die Abführvorrichtung dazu ausgelegt ist, vorwärts über die Bodenoberfläche bewegt zu werden, und wobei die Abführvorrichtung eine Hebevorrichtung umfasst, um den Streifen Kunstrasen von der Bodenoberfläche abzuheben, während die Abführvorrichtung vorwärts bewegt wird.

10. Abführvorrichtung nach einem der Ansprüche 1-8, wobei die Abführvorrichtung als eine stationäre Vorrichtung ausgelegt ist und wobei die Abführvorrichtung eine Aufnahmevorrichtung umfasst, die dazu ausgelegt ist, den Streifen Kunstrasen, der der Aufnahmevorrichtung zugeführt wird, aufzunehmen.

11. Verfahren zum Abführen eines Streifens Kunstrasen von einer Bodenoberfläche, wobei das Verfahren umfasst:
- Anheben des Streifens Kunstrasen von dem Boden,
- Abführen einer ersten Schicht Füllmaterial in einem Arbeitsschritt,
- Abführen einer zweiten Schicht Füllmaterial in einem nachfolgenden Arbeitsschritt, wobei die zweite Schicht aus einem Füllmaterial einer anderen Art als die erste Schicht besteht.

12. Verfahren nach Anspruch 11, das umfasst:
- Biegen eines Teils des Streifens in einem Biegebereich, so dass sich die Grashalme in dem Biegebereich nach außen und voneinander weg erstrecken, und
- Erfassen des Streifens Kunstrasen in dem Biegebereich durch die erste Füllmaterialabführvorrichtung.

13. Verfahren nach Anspruch 11 oder 12, das umfasst:
- Bereitstellen einer ersten Füllmaterialabführvorrichtung, und
- Erfassen der ersten Schicht Füllmaterial mit der ersten Füllmaterialabfiihrvorrichtung unter Vermeidung von Kontakt mit der zweiten Schicht Füllmaterial, die sich tiefer in dem Kunstrasen, d. h. näher an der Basis des Streifens Kunstrasen, befindet.

14. Verfahren nach einem der Ansprüche 11-13, das ferner umfasst:
- Bereitstellen eines Trägers zum Tragen eines Teils des Streifens Kunstrasen in einer umgedrehten Ausrichtung oder einer im Wesentlichen umgedrehten Ausrichtung, und
- Abführen der zweiten Schicht Füllmaterial durch Erfassen des umgedrehten Teils des Streifens Kunstrasen.

## Revendications

1. Dispositif de retrait destiné à retirer de la matière de remplissage d'une bande de gazon artificiel, le dispositif de retrait comprenant,
un ou plusieurs guides destinés à guider la bande de gazon artificiel à travers le dispositif de retrait,
un premier dispositif de retrait de matière de remplissage destiné à retirer une première couche de matière de remplissage de la bande de gazon artificiel, et
un second dispositif de retrait de matière de remplissage destiné à retirer une seconde couche de matière de remplissage de la bande de gazon artificiel, la seconde couche étant constituée d'une matière de remplissage de type différent de la première couche, dans lequel le second dispositif de retrait de matière de remplissage est placé en aval du premier dispositif de retrait de matière de remplissage.

2. Dispositif de retrait selon la revendication 1, dans lequel :
le premier dispositif de retrait de matière de remplissage est conçu pour retirer des grains de la bande de gazon artificiel, et
le second dispositif de retrait de matière de remplissage est un dispositif de retrait de particules de sable destiné à retirer des particules de sable de la bande de gazon artificiel.

3. Dispositif de retrait selon la revendication 1 ou 2, dans lequel le premier dispositif de retrait de matière de remplissage et le second dispositif de retrait de matière de remplissage sont des dispositifs distincts qui sont placés à une certaine distance l'un de l'autre.

4. Dispositif de retrait selon l'une quelconque des revendications précédentes, comprenant un dispositif de courbure destiné à courber la bande de gazon artificiel dans une région de courbure de sorte que, dans la région de courbure, les brins d'herbe s'étendent vers l'extérieur et divergent les uns des autres, dans lequel le premier dispositif de retrait de matière de remplissage est conçu pour venir en contact avec la bande de gazon artificiel dans la région de courbure.

5. Dispositif de retrait selon l'une quelconque des revendications précédentes, dans lequel le premier dispositif de retrait de matière de remplissage est conçu pour retirer sensiblement la première couche de matière de remplissage, mais pour laisser sensiblement la seconde couche, plus profonde, de matière de remplissage dans la bande de gazon artificiel.

6. Dispositif de retrait selon l'une quelconque des revendications précédentes, dans lequel le premier dispositif de retrait de matière de remplissage est conçu pour venir en contact avec une couche supérieure de matière de remplissage mais pour éviter sensiblement tout contact avec la seconde couche plus profonde de matière de remplissage.

7. Dispositif de retrait selon l'une quelconque des revendications précédentes, dans lequel le premier dispositif de retrait de matière de remplissage comprend un ou plusieurs supports de bande conçus pour orienter verticalement, ou sensiblement verticalement, une partie de la bande de gazon artificiel, dans lequel le premier dispositif de retrait de matière de remplissage est conçu pour venir en contact avec la bande dans la région dans laquelle la bande est orientée verticalement, ou sensiblement verticalement.

8. Dispositif de retrait selon l'une quelconque des revendications précédentes, comprenant en outre un ou plusieurs supports de bande destinés à supporter une partie de la bande de gazon artificiels dans une orientation sensiblement retournée, c'est-à-dire dans une orientation à l'envers, ou une orientation sensiblement à l'envers, dans lequel le second dispositif de retrait de matière de remplissage est conçu pour venir en contact avec la bande de gazon artificiel à l'endroit où elle est sensiblement retournée, le second dispositif de retrait de matière de remplissage comprenant un dispositif de battage destiné à battre la bande de gazon artificiel dans une région de battage.

9. Dispositif de retrait selon l'une quelconque des revendications précédentes, dans lequel le dispositif de retrait est conçu pour se déplacer vers l'avant sur la surface du sol, le dispositif de retrait comprenant un dispositif de levage conçu pour lever la bande de gazon artificiel de la surface du sol à mesure que le dispositif de retrait avance.

10. Dispositif de retrait selon l'une quelconque des revendications 1 à 8, dans lequel le dispositif de retrait est conçu comme un dispositif stationnaire, le dispositif de retrait comprenant un dispositif de réception conçu pour recevoir la bande de gazon artificiel qui est amenée vers le dispositif de retrait.

11. Procédé de retrait de matière de remplissage d'une bande de gazon artificiel d'une surface au sol, le procédé faisant appel :
- au levage de la bande de gazon artificiel du sol,
- au retrait d'une première couche de matière de remplissage lors d'une étape de traitement,
- au retrait d'une seconde couche de matière de remplissage lors d'une étape de traitement ultérieure, la seconde couche étant une matière de remplissage de type différent de la première couche.

12. Procédé selon la revendication 11, faisant appel :
à la courbure d'une partie de la bande dans une région de courbure de sorte que les brins d'herbe s'étendent vers l'extérieur et de manière écartée les uns des autres dans la région de courbure, et
à la mise en contact de la bande de gazon artificiel avec le premier dispositif de retrait dans la région de courbure.

13. Procédé selon la revendication 11 ou 12, faisant appel :
à l'utilisation d'un premier dispositif de retrait de matière de remplissage, et
à la mise en contact du premier dispositif de retrait de matière de remplissage avec la première couche de matière de remplissage en évitant sensiblement tout contact avec la seconde couche de matière de remplissage qui est située plus profondément dans le gazon artificiel, c'est-à-dire plus près de la base d'une bande de gazon artificiel.

14. Procédé selon l'une quelconque des revendications 11 à 13, faisant en outre appel :
à l'utilisation d'un support pour supporter une partie de la bande de gazon artificiel dans une orientation retournée, ou une orientation sensiblement retournée, et
au retrait de la seconde couche de matière de remplissage par contact avec la partie retournée de la bande de gazon artificiel.
